# FASCICULE DE BREVET EUROPEEN

(11) **EP 2 611 286 B1**
(45) Date de publication et mention de la délivrance du brevet: **16.04.2014**
(21) Numéro de dépôt: 11744040.4
(22) Date de dépôt: 29.06.2011
(51) Int. Cl.: A01K 1/01

(54) **TOILETTES DOMESTIQUES CANINES MIXTES**
FÜR BEIDE HUNDEGESCHLECHTER GEEIGNETE TOILETTE
MIXED TOILETS FOR DOMESTIC CANINES

(30) Priorité: 01.09.2010 FR 1003502
(43) Date de publication de la demande: 10.07.2013
(73) Titulaire: Sanidome Canin S.a.r.l., 77184 Emerainville (FR)
(72) Inventeur: GOUY, Gérard, 77184 Emerainville (FR)
(86) Numéro de dépôt international: PCT/FR2011/000387
(87) Numéro de publication internationale: WO 2012/028790

(56) Documents cités:
- EP-A2- 1 488 691
- WO-A1-2010/024845
- FR-A1- 2 599 585
- FR-A1- 2 842 700
- US-A1- 2006 037 548
- US-A1- 2007 163 508

## Description

L'invention concerne des toilettes (WC) domestiques canines.

Ce dispositif permet aux chiens de faire leurs besoins sur leur lieu même de vie et évite les désagréments et les nuisances causées par les déjections en ville, sur les trottoirs et autres lieux publics. Il s'adresse à tous les propriétaires de chiens et plus particulièrement à ceux qui vivent en milieu urbain. Il évite aux chiens de se retenir des heures durant, lors des absences prolongées de leurs maîtres.

Il est connu du document US4986218 des toilettes pour chien comportant un collecteur contenant une couche absorbante posée sur un film plastique. Les toilettes comportent également un déflecteur vertical qui dirige l'urine du mâle (qui urine « debout ») dans le collecteur.

Toutefois, ce dispositif comporte des inconvénients majeurs. En particulier, ce dispositif n'est pas adapté pour le mâle qui ne peut se placer que partiellement sur les toilettes.

Deux positions sont nécessaires pour le mâle, selon qu'il urine ou qu'il crotte. D'autre part, les urines et les déjections sont recueillies par une couche absorbante disposée au fond du collecteur. Le chien, s'il est seul dans la journée, refusera d'utiliser l'appareil plusieurs fois pour éviter de mettre ses pattes dans sa propre urine. Egalement, l'utilisation de couches jetables pose des problèmes d'élimination des déchets pour le maître qui devra renouveler les couches à chaque passage. Le volume des couches, ramené à une ville entière, surcharge les déchets ménagers. Les accessoires nécessaires à son fonctionnement (couches et films plastiques) ne sont pas écologiques. Un dispositif comportant les caractéristiques du préambule de la revendication 1 est connu de US 2006/0037548.

L'invention permet de résoudre au moins en partie les inconvénients ci-dessus.

L'invention concerne donc des toilettes domestiques canines comportant un receveur destiné à recueillir les urines et un déflecteur agencé sensiblement verticalement pour recevoir les urines du mâle, le receveur comporte :
un bac destiné à être posé sur le sol ;
un couvercle fermant le receveur et comportant au moins une trémie ;
au moins un tiroir extractible inséré dans une des faces latérales du bac; le déflecteur étant agencé sur le receveur pour permettre l'écoulement des urines du mâle dans la trémie, laquelle est agencée pour diriger les urines dans le tiroir par le Lizis d'une ouverture. Le déflecteur est monté pivotant sur le receveur et est agencé pour pouvoir recouvrir le receveur et le fermer hermétiquement.

Ainsi, les urines du mâle comme de la femelle sont recueillies dans des tiroirs extractibles faciles à nettoyer. L'entretien des toilettes est donc facilité. De plus, le chien trouve toujours des toilettes propres car les urines sont dirigées immédiatement vers le tiroir. Le couvercle sur lequel il se tient est donc toujours propre.

Avantageusement, le couvercle comporte au moins un caillebotis supportant l'animal. Un caillebotis permet avoir une surface stable et propre pour l'animal. lors de son passage sur le dispositif et comportant un système de pinces pour maintenir la lingette. De plus, le couvercle peut comporter des moyens de fixation pour une lingette qui recevra les déjections solides; Les toilettes étant destinées à être utilisée à domicile, elles pourront être tenues fermées et comporter une poignée et des pieds afin d'être facilement stockeés verticalement.

Un exemple de réalisation de l'invention est décrit ci après en référence aux figures annexées qui sont données à titre d'exemple non limitatif :
la figure 1 représente des toilettes canines selon l'invention;
la figure 2 est une vue de détail des toilettes illustrée en figure 1;
les figures 3 et 4 illustrent les moyens d'attache du déflecteur sur le receveur;
la figure 5 illustre un piétement des toilettes;
la figure 6 illustre un mécanisme de fermeture.

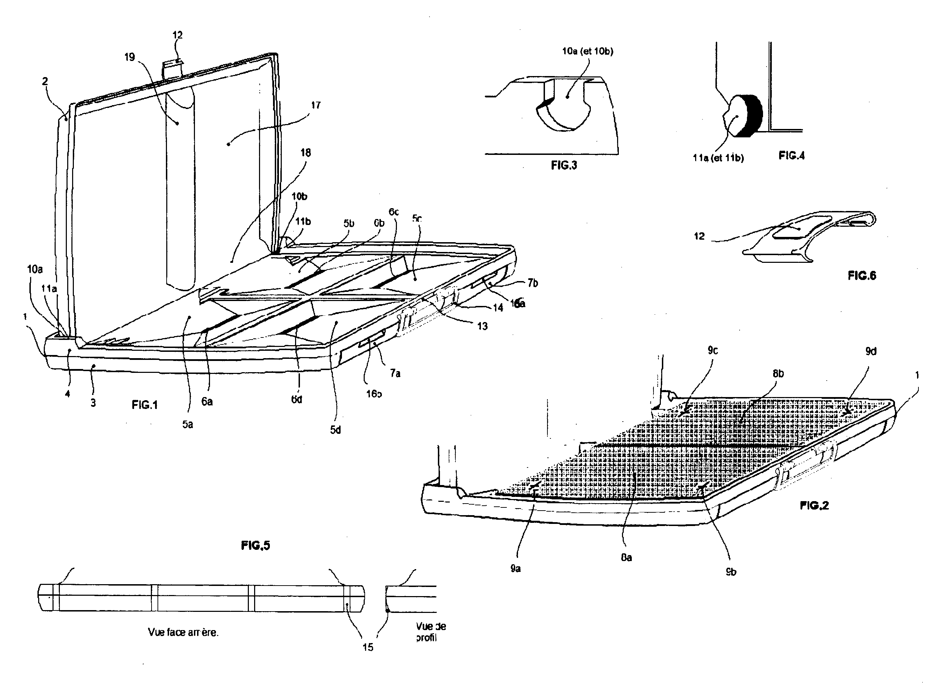

En référence à la figure 1, les toilettes comportent un receveur 1 en forme de bac posé sur le sol et qui permet de recueillir les urines. Le receveur 1 comporte une face inférieure posée sur le sol, des faces latérales verticales 3 et un couvercle 4 fermant le bac 3. Deux tiroirs 7a et 7b sont insérés par la face latérale avant dans le receveur 1 entre la face inférieure et le couvercle 4. Le couvercle 4 qui peut être monobloc avec le bac 3 ou rapporté est creusé de quatre trémies 5a,5b,5c,5d terminées chacune par une ouverture en forme de fente 6a, 6b, 6c,6d. Les trémies sont agencées pour diriger les urines vers les tiroirs 7a,7b. Les trémies se présentent sous la forme d'entonnoirs dont les parois sont planes et qui dirigent les urines vers une fente, ici sensiblement rectangulaire qui débouche sur les tiroirs.

Les tiroirs 7a,7b sont agencés pour venir affleurer la face avant du receveur 1 afin de ne pas créer de parties saillantes. Chaque tiroir 7a,7b comporte une poignée de retrait intégrée 16a,16b permettant son extraction.

Les toilettes comportent également un déflecteur 2 disposé sensiblement verticalement le long de la face arrière du receveur 1 et qui est destiné à recevoir les urines du mâle. Le déflecteur 2 est un bac formé d'une plaque verticale 17 et de quatre parois perpendiculaires à la plaque. Le déflecteur 2 comporte à sa base, c'est-à-dire au voisinage de sa jonction avec le receveur 1, une corniche 18 qui dirige les urines s'écoulant le long de la plaque 17 vers le couvercle 4 et les trémies 5a,5b,5c,5d.

La figure 2 illustre le receveur 1 sur lequel est posé deux caillebotis 8a et 8b qui permettent à l'animal de se tenir sur le receveur 1 sans être gêné par les trémies. Les caillebotis 8a,8b peuvent être amovibles pour permettent leur nettoyage facilement ou être intégrée au couvercle pour faciliter la fabrication du couvercle et diminuer les coûts. Les caillebotis 8a,8b permettent d'isoler les pattes de l'animal de ses propres urines. Le chien a toujours un espace propre et sec, quelque soit le nombre de passages sur l'appareil.

Ainsi, le mâle venant uriner se tient debout sur le couvercle et urine sur le déflecteur 2. Les urines s'écoulent le long de la plaque 17 puis sont dirigées vers le receveur 1 par la corniche 18. Les urines sont ensuite dirigées vers les tiroirs 7a,7b par les trémies 5a,5b,5c,5d.

La femelle se place directement sur le receveur 1 pour uriner. Ses urines sont alors dirigées directement vers les tiroirs 7a,7b par les trémies 5a,5b,5c,5d.

Ces toilettes sont simples et pratiques. Elles restent propres même après plusieurs utilisations. Les tiroirs amovibles 7a,7b sont faciles à nettoyer et écologiques car ils ne nécessitent pas de couches absorbantes.

Dans le cas des déjections solides (crottes), le couvercle 4 comporte des moyens de maintien pour des lingettes. Le caillebotis 8a,8b, illustré en figure 2 comporte des pinces 9a, 9b, 9c et 9d destinées à maintenir sur le caillebotis des lingettes. Les chiens, par habitude, défèquent à heure fixe. Il est donc facile pour le maître de disposer sur le receveur 1 une lingette à l'heure habituelle de l'animal. Ainsi, en dehors d'heures précises, les toilettes restent utilisables pour les urines sans que le chien soit incommodé par la présence d'une lingette sale.

Les dimensions du receveur 1 sont adaptées aux chiens de petite et moyenne taille (la plus forte population en milieu urbain) afin qu'ils puissent tenir entièrement dessus et évoluer à leur aise. Il est important que le mâle puisse se tenir complètement sur le receveur 1 pour être à l'aise. C'est pourquoi, le receveur 1 et le déflecteur 2 , qui sont de mêmes dimensions, sont plus larges que profonds. Le receveur 1 est agencé pour qu'un chien de taille moyenne puisse tenir debout en étant parallèle au déflecteur 2 , de sorte qu'en levant la patte pour uriner, l'urine soit dirigée vers le déflecteur 2.

Le déflecteur 2 est de préférence pivotant et amovible par rapport au receveur 1. Le déflecteur 2 s'ouvre en position verticale et se referme sur le receveur 1 de façon hermétique pour permettre le transport des toilettes. Il comporte en outre en son milieu et sur toute sa hauteur, une forme saillante 19 qui sert à maintenir en place les deux caillebotis 8a,8b lorsque l'appareil est fermé. Le déflecteur 2 s'articule à l'intérieur du receveur 1 grâce à des pivots 10a,10b et à des niches 11 a, 11 b, illustrés en figure 3 et 4, qui lui permettent une ouverture au-delà de 90°. Ainsi, le déflecteur se trouve en appui sur la paroi latérale arrière du receveur 1 avec le centre de gravité vers l'extérieur pour permettre au déflecteur 2 de se positionner sensiblement verticalement et ne pas se refermer de lui-même.

Les toilettes comportent un mécanisme de fermeture 12 et 13 permettant de solidariser le receveur 1 et le déflecteur 2 en position fermée. Le mécanisme de fermeture 12 et 13 comporte un volet de forme courbe 12, illustré en Fig 6, monté pivotant sur le déflecteur 2. Le receveur 1 comporte une entaille 13 qui vient recevoir le volet 12 complémentaire. Le volet 12 utilise la souplesse et la déformation de la matière plastique et sa capacité de « mémoire de forme » pour assurer le serrage.

En référence à la figure 5, les toilettes peuvent comporter un piétement 15 permettant aux toilettes, une fois fermées, de tenir debout. Les toilettes peuvent également comporter une poignée 14 sur la face latérale avant du receveur 1 afin de permettre le transport des toilettes en position fermées.

Les toilettes ainsi décrites comportent des dispositions selon un mode particulier de réalisation. D'autres dispositions peuvent être utilisées. En particulier, les toilettes sont réalisées préférentiellement en plastique. Toutefois, d'autres matériaux comme le carton, le polystyrène, le bois, les matériaux composites, le métal, peuvent être envisagés.

Le déflecteur 2 est articulé sur le receveur 1 par un pivot amovible.

Il est possible de réaliser le pivot par des arbres amovibles insérés dans des ouvertures disposées en vis-à-vis sur le receveur 1 et le déflecteur 2.

Le nombre de trémies, de tiroirs et de caillebotis peut varier et n'est pas limité à l'exemple illustré. En particulier, le caillebotis peut être réalisé en une seule pièce. De même, une seule trémie est suffisante si elle est agencée pour recueillir la totalité des urines et les diriger vers les tiroirs.

Les trémies sont partie intégrante du couvercle du receveur, mais peuvent être rapportées sur le receveur.

Les parois des trémies peuvent être d'une autre forme que planes.

De même, le positionnement des accessoires (poignée, piétement, système de fermeture) peut être modifié pour, selon le besoin, privilégier l'une des autres faces latérales.

Ces accessoires sont en matière plastique, mais peuvent être réalisés en d'autres matériaux comme le métal, le caoutchouc, le tissu.

## Revendications

1. Toilettes domestiques canines comportant un receveur (1) destiné à recueillir les urines et au moins un déflecteur (2) agencé sensiblement verticalement pour recevoir les urines du mâle, le receveur (1) comporte :
un bac (3) destiné à être posé sur le sol ;
un couvercle (4) fermant le receveur (1) et comportant au moins une trémie (5a,5b,5c,5d);
au moins un tiroir extractible (7a, 7b) inséré dans une des faces latérales du bac (3); le déflecteur (2) étant agencé sur le receveur (1) pour permettre l'écoulement des urines du mâle dans la trémie (5a, 5b, 5c, 5d), laquelle est agencée pour diriger les urines dans le tiroir (7a, 7b), par le biais d'une ouverture (6a, 6b, 6c, 6d) ;
**caractérisé en ce que** le déflecteur (2) est monté pivotant sur le receveur (1) et **en ce que** le déflecteur (2) est agencé pour pouvoir recouvrir le receveur (1) et le fermer hermétiquement.

2. Toilettes selon la revendication 1 dans laquelle le couvercle (4) comporte au moins un caillebotis (8a, 8b).

3. Toilettes selon la revendication 2 dans laquelle le caillebotis (8a, 8b) est amovible.

4. Toilettes selon la revendication 3 dans laquelle le couvercle comporte des moyens (9a, 9b, 9c, 9d) pour maintenir une lingette sur le caillebotis.

5. Toilettes selon la revendication 1 dans lesquelles les dimensions du receveur (1) et du déflecteur (2) permettent de recevoir un chien de taille moyenne.

6. Toilettes selon l'une quelconque des revendications 1 à 5 dans lesquelles le déflecteur (2) est détachable du receveur (1).

7. Toilettes selon l'une quelconque des revendications 1 à 6 dans lesquelles le receveur (1) et le déflecteur (2) comportent des moyens (10a, 10b, 11a, 11b) pour maintenir le déflecteur sensiblement vertical. (entre 90 et 94° d'ouverture)

8. Toilettes selon la revendication 7 dans lesquelles le déflecteur (2) et le receveur (1) comportent des moyens de verrouillage (12 et 13) des toilettes en position fermée.

9. Toilettes selon l'une quelconque des revendications 1 à 8 comportant une poignée (14).

10. Toilettes selon l'une quelconque des revendications 1 à 9 comportant des pieds (15) permettant de positionner les toilettes verticalement une fois fermées.

11. Toilettes selon l'une quelconque des revendications 1 à 10 comportant un caillebotis (8a, 8b), une trémie (5a,5b,5c,5d), une ouverture (6a, 6b, 6c, 6d) et un tiroir (7a, 7b).

## Patentansprüche

1. Hunde-Haustoiletten bestehend aus einem Behälter (1) zum Sammeln des Urins und mindestens einer im Wesentlichen senkrechten Umlenkvorrichtung (2) zum Sammeln des Urins des Rüden, wobei der Behälter (1) besteht aus:
einer auf den Boden zu stellenden Wanne (3);
einem Deckel (4), der den Behälter (1) schließt und mindestens einen Trichter (5a, 5b, 5c, 5d) enthält;
mindestens einer, aus einer der Seitenwände der Wanne (3) herausziehbaren Lade (7a, 7b); wobei die Umlenkvorrichtung (2) derart auf dem Behälter (1) gestaltet ist, dass der Urin des Rüden in den Trichter (5a, 5b, 5c, 5d) fließt, der derart gestaltet ist, dass der Urin über eine Öffnung (6a, 6b, 6c, 6d) in die Lade (7a, 7b) geführt wird
Die Umlenkvorrichtung (2) ist schwenkend auf dem Behälter (1) montiert und derart gestaltet, dass sie den Behälter (1) abdecken und hermetisch verschließen kann.

2. Toiletten nach Anspruch 1, bei denen der Deckel (4) eine Öffnung (6a, 6b, 6c, 6d) in die Lade (7a, 7b) geführt wird.mindestens ein Gitterrost (8a, 8b) aufweist.

3. Toiletten nach Anspruch 2, bei denen das Gitterrost (8a, 8b) abnehmbar ist.

4. Toiletten nach Anspruch 3, bei denen der Deckel mit Mitteln (9a, 9b. 9c, 9d) ausgestattet ist, um auf dem Gitterrost ein Feuchtreinigungstuch zu halten.

5. Toiletten nach Anspruch 1, bei denen die Abmessungen des Behälters (1) und der Umlenkvorrichtung (2) für einen Hund mittlerer Größe geeignet sind.

6. Toiletten nach einem der vorstehenden Ansprüche 1 bis 5, bei denen die Umlenkvorrichtung (2) sich von dem Behälter (1) trennen lässt.

7. Toiletten nach einem der Ansprüche 1 bis 6, bei denen der Behälter (1) und die Umlenkvorrichtung (2) mit Mitteln (10a, 10b, 11a, 11 b) ausgestattet sind, um die Umlenkvorrichtung im Wesentlichen senkrecht zu halten (Öffnungswinkel zwischen 90° und 94°)

8. Toiletten nach Anspruch 7, bei denen die Umlenkvorrichtung (2) und der Behälter (1) Mittel zur Verriegelung (12 und 13) der Toiletten in geschlossener Position aufweisen.

9. Toiletten nach einem der Ansprüche 1 bis 8, die einen Griff (14) aufweisen.

10. Toiletten nach einem der Ansprüche 1 bis 9 mit Füßen (15), die es ermöglichen, die Toiletten in geschlossenem Zustand senkrecht zu stellen.

11. Toiletten nach einem der Ansprüche 1 bis 10 mit einem Gitterrost (8a, 8b), einem Trichter (5a, 5b, 5c, 5d), einer Öffnung (6a, 6b, 6c, 6d) und einer Lade (7a, 7b)

## Claims

1. Canine toilet for domestic use having a collector (1) for collecting urine and at least one deflector (2) arranged essentially vertically to collect male dogs' urine, the collector (1) comprises:
a tray (3) intended to be placed on the ground;
a cover (4) closing the collector (1) and comprising at least one hopper (5a, 5b, 5c, 5d);
at least one extractable drawer (7a, 7b) inserted into one of the sides of the tray (3), the deflector (2) being arranged on the collector (1) to permit the flow of male dog urine into the hopper (5a, 5b, 5c, 5d), which is arranged to direct the urine into the drawer (7a, 7b),
through an opening (6a, 6b, 6c, 6d).
The deflector (2) is mounted so that it pivots on the collector (1) and is arranged so that it can cover the collector (1) and close it tightly.

2. Toilet according to claim 1 wherein the cover (4) comprises at least one grating (8a, 8b).

3. Toilet according to claim 2 wherein the grating (8a, 8b) is removable.

4. Toilet according to claim 3 wherein the cover includes means (9a, 9b, 9c, 9d) for holding a wiper on the grating.

5. Toilet according to claim 1 in which the dimensions of the collector (1) and the deflector (2) are sufficient to receive a medium size dog.

6. Toilet according to any one of claims 1 to 5 wherein the deflector (2) is detachable from the collector (1).

7. Toilet according to any one of claims 1 to 6 wherein the collector (1) and the deflector (2) comprise means (10a, 10b, 11a, 11b) for holding the deflector essentially vertical.

8. Toilet according to claim 7 wherein the deflector (2) and the collector (1) have means (12 and 13) for locking the toilet in the closed position.

9. Toilet according to any one of claims 1 to 8 having a handle (14).

10. Toilet according to any one of claims 1 to 9 having feet (15) for vertical positioning of the toilet once closed.

11. Toilet according to any one of claims 1 to 10 comprising a grating (8a, 8b), a hopper (5a, 5b, 5c, 5d), an opening (6a, 6b, 6c, 6d) and a drawer (7a, 7b)
